# EUROPEAN PATENT APPLICATION

(11) **EP 3 042 970 A1**
(43) Date of publication of application: **13.07.2016**
(21) Application number: 14839327.5
(22) Date of filing: 01.09.2014
(51) Int. Cl.: C22B 7/02, C22B 9/02, C22B 19/30, C22B 19/32, C25C 3/34

(54) **ZINC PRODUCTION METHOD USING ELECTRIC FURNACE DUST AS RAW MATERIAL**

(30) Priority: 02.09.2013 JP 2013181287
(71) Applicant: Kinotech Solar Energy Corporation, Tokyo 103-0027 (JP)
(72) Inventor: IOSAKI, Masaaki, Nagareyama-shi Chiba 270-0163 (JP); MORI, Shuji, Fujisawa-shi Kanagawa 251-0015 (JP); SATO, Yuzuru, Sendai-shi Miyagi 989-3204 (JP)
(74) Representative: v. Bezold & Partner Patentanwälte - PartG mbB
(86) International application number: PCT/JP2014/072931
(87) International publication number: WO 2015/030235

(57) **Abstract**

A zinc production method including a chlorination step 101 at which crude zinc chloride vapor 3 and an oxygen gas 2 are obtained by bringing electric furnace dust 1 containing zinc oxide or secondary dust 1 generated at the time of reducing the electric furnace dust in a reduction furnace into contact with a mixed gas containing a chlorine gas 8 and an oxygen-containing gas 10, converting a zinc oxide component in the electric furnace dust 1 or the secondary dust 1 into zinc chloride, and vaporizing the zinc chloride. The zinc production method further includes purification steps 102, 104, and 105 at which a zinc chloride component contained in the crude zinc chloride vapor 3 is separated from components 5 and 7 other than zinc chloride contained in the crude zinc chloride vapor 3 to obtain a purified zinc chloride melt 6, and an electrolysis step 103 at which the purified zinc chloride melt 6 is electrolyzed to obtain a zinc melt 9 and the chlorine gas 8.

## Description

### TECHNICAL FIELD

The present invention relates to a zinc production method, and more particularly relates to a zinc production method using, as a raw material, electric furnace dust generated at the time of melting and refining of scraps in an electric furnace method, being one of iron-making processes, or dust generated in a reduction furnace at the time of recycling electric furnace dust as an iron-making raw material, a non-ferrous material, or a cement extender (hereinafter, "secondary dust").

### BACKGROUND ART

Generally, in the electric furnace method, being one of the iron-making processes, electric furnace dust is generated as industrial waste containing zinc oxide components in an amount of about 1.5% to 2.0% of steel production at the time of melting and refining of scraps. It is reported that 7 million tons of electric furnace dust are generated globally, and 0.5 million tons of electric furnace dust are generated in Japan.

Most of iron scraps are from discarded electric appliances or discarded automobiles. A surface for painting of the discarded electric appliances or discarded automobiles is galvanized. Scraps contain paint, plastic, and an oil content. Therefore, the electric furnace dust contains hazardous organic matter such as chloride and dioxin, in addition to heavy metals such as zinc and lead. On the other hand, the electric furnace dust contains about 20% to 30% iron and 20% to 30% zinc. Accordingly, the electric furnace dust is very useful as resources.

However, it is difficult to directly use the electric furnace dust as a raw material for aqueous electrolysis, which is a mainstream of the current zinc production method. This is because free iron oxide that is soluble in sulfuric acid is contained in a large amount in the electric furnace dust, while most of zinc in the electric furnace dust is zinc ferrite, which is a compound of zinc oxide and iron oxide and is hardly soluble in sulfuric acid. In addition, the electric furnace dust also contains halogen such as chlorine, which is harmful for aqueous electrolysis. Due to these reasons, such a zinc production method has been used that reduces the electric furnace dust once, recovers the electric furnace dust as crude zinc oxide, and performs electrolytic treatment.

As mainstream recycling techniques for obtaining crude zinc oxide from the electric furnace dust, there can be mentioned Wells furnace method, plasma method, electric melting reduction method, MF furnace method, or rotating bed furnace method. Currently, crude zinc oxide produced by these recycling techniques is used as a raw material for dry and wet zinc refining.

Under such circumstances, Patent Document 1 relates to a zinc recovery method, and discloses a metal zinc recovery method of recovering metal zinc from electric furnace dust containing zinc oxide, which is generated from an iron scrap smelting furnace using an electric furnace method or the like.

Specifically, Patent Document 1 discloses a process of mixing and kneading electric furnace dust or secondary dust with metal iron-containing powder, a reducing agent, a binding agent, and water, and thereafter, molding and firing the kneaded product in a reduction furnace. Accordingly in Patent Document 1, zinc oxide in the electric furnace dust or in the secondary dust is recovered as metal zinc vapor.

### PRIOR ART DOCUMENT

### PATENT DOCUMENT

Patent Document 1: Japanese Patent Application Laid-open Publication No. 2002-105550

### SUMMARY OF THE INVENTION

### PROBLEM TO BE SOLVED BY THE INVENTION

However, according to studies made by the present inventors, in the configuration disclosed in Patent Document 1, zinc oxide in the electric furnace dust or in the secondary dust is recovered as metal zinc vapor. Because crude zinc oxide contains a chlorine component, removal of the chlorine component is costly at the time of generating zinc bare metal from the crude zinc oxide. Therefore, there is still room for improvement.

Furthermore, in the configuration disclosed in Patent Document 1, the composition of metal zinc to be recovered has a purity of 3N at most, and there is still room for improvement in the purity.

According to further studies made by the present inventors, in an electrolytic method in wet refining using crude zinc oxide as a raw material, aqueous electrolysis of dilute sulfuric acid is used. The current density thereof is as low as 500 A/m². Further, zinc bare metal grown on a cathode surface needs to be recovered by detaching the cathode. Therefore, recovery work and equipment therefor are required, and thus there is room for improvement. Accordingly, in the electrolytic method in wet refining, the size of the plant tends to become large in order to achieve economies of scale to reduce the cost.

That is, in the current zinc production method using electric furnace dust, electric furnace dust can be transferred to an intermediate material, being crude zinc oxide. However, there is no other choice but to transport crude zinc oxide into a large-scale zinc smelter, bearing the cost of transportation.

As described above, crude zinc oxide is produced as the secondary dust from the electric furnace dust by using large-scale equipment and much energy. In the aqueous electrolysis, being the mainstream of the current zinc production method, one of the reasons for not being able to use the electric furnace dust directly is that most of zinc in the electric furnace dust is zinc ferrite, which is hardly soluble in sulfuric acid. If zinc in the electric furnace dust can be directly treated, large energy saving can be realized.

The present inventors have found that the problems described above can be solved by extracting a zinc component in the electric furnace dust or in the secondary dust by a chlorination process, and then refining and treating the zinc component according to a molten salt electrolysis method, thereby completing the present invention.

The present invention has been achieved in view of the above problems, and an object of the present invention is to provide a zinc production method, which is suitable for treatment of electric furnace dust or the like containing chlorine in a large amount without requiring any additional cost for dechlorination, can produce zinc bare metal having a high purity of 4N or more, and can be operated with a compact apparatus.

### MEANS FOR SOLVING THE PROBLEM

The basic content of the present invention is to obtain zinc bare metal having a high purity of 4N or more by a configuration in which electric furnace dust or secondary dust is brought into contact with a mixed gas containing a chlorine gas and an oxygen-containing gas, a zinc oxide component in the electric furnace dust or the secondary dust is converted into zinc chloride and vaporized, and then extracted as crude zinc chloride vapor. Thereafter, the crude zinc chloride vapor is purified to obtain purified zinc chloride in a molten state, and further treated by a molten salt electrolysis method.

At a chlorination step of the present invention, by bringing the electric furnace dust or the secondary dust containing zinc oxide into contact with the mixed gas containing a chlorine gas and an oxygen-containing gas, an iron component in the electric furnace dust or the secondary dust is chlorinated only in a trace amount, and most of the iron component remains as a solid. Therefore, the zinc component in the electric furnace dust or the secondary dust can be selectively chlorinated and vaporized.

In chlorination of the secondary dust containing mainly crude zinc oxide, chlorination by using either only the chlorine gas or the mixed gas containing the chlorine gas and the oxygen-containing gas is possible. However, in a case of the electric furnace dust, zinc ferrite needs to be chlorinated.

In this case, it is desired to chlorinate a zinc oxide component preferentially, without chlorinating most of the iron oxide component and free iron oxide present singly in zinc ferrite.

In the present invention, it has been found by thermodynamic studies that the zinc oxide component can be preferentially chlorinated by using the mixed gas containing the chlorine gas and the oxygen-containing gas, and this fact has been confirmed by experiments.

Furthermore, at a purification step of the present invention, the zinc chloride component contained in the crude zinc chloride vapor obtained at the chlorination step is separated from components other than zinc chloride contained in the crude zinc chloride vapor, thereby enabling to obtain purified zinc chloride. As the components other than zinc chloride, iron chloride produced by chlorination of a part of iron oxide, lead chloride and alkali chloride derived from raw materials, and the like can be considered.

As the purification step, it is preferable to adopt a distillation step or a reduction step. Further, the distillation step and the reduction step can be combined to adopt multiple purification steps to be performed in this order.

When the distillation step is adopted as the purification step, purified zinc chloride is obtained by distilling a melt containing a zinc chloride component contained in the crude zinc chloride vapor. Accordingly, the zinc chloride component in the crude zinc chloride vapor is separated from metal chloride components other than zinc chloride by using a vapor pressure difference therebetween. As a result, the zinc chloride component can be purified.

When the reduction step is adopted as the purification step, by adding a reducing agent to a melt of crude zinc chloride, or mixed molten salt of crude zinc chloride and alkali chloride or alkaline earth chloride, a metal impurity component more noble than zinc can be reduced and deposited, thereby purifying the zinc chloride component. When the mixed molten salt is used, a metal component less noble than zinc may be contained therein.

When the distillation step and the reduction step are combined to adopt multiple purification steps to be performed in this order, the zinc chloride component in the crude zinc chloride vapor can be purified in a mode with a higher purity due to a synergistic effect thereof.

At the electrolysis step of the present invention, because the molten salt electrolytic bath contains chloride, even if the raw material contains a chlorine component, an additional cost for dechlorination required in the conventional method is not required. Therefore, the electrolysis step is advantageous for treatment of electric furnace dust or the like containing chlorine in a large amount.

Furthermore, at the electrolysis step of the present invention, the molten salt electrolysis method of zinc chloride is used. Therefore, as compared to existing aqueous electrolysis in which the current density is about 500 A/m² per 1 m² of the surface area of an electrode, productivity as high as 5000 A/m², which is 10 times that of the existing aqueous electrolysis, can be achieved, and thus the equipment can be made compact. Further, in the molten salt electrolysis method, if the temperature of the electrolytic bath is set to a melting point or higher of metal zinc, zinc bare metal to be electrolyzed and deposited can be extracted in a molten state from the bottom of an electrolytic cell, by using known methods such as a gas lift method by means of an inert gas such as a nitrogen gas, a vacuum suction method, and a method using a solid centrifugal pump. Accordingly, detachment work of a cathode such as in the aqueous electrolysis is not required, thereby enabling energy saving. Therefore, in a place where electric furnace dust is generated, an on-site zinc smelter that uses, as a raw material, electric furnace dust containing a halogen component can be realized.

That is, in order to achieve the above object, a first aspect of the present invention is to provide a zinc production method including a chlorination step of obtaining crude zinc chloride vapor by bringing electric furnace dust containing zinc oxide or secondary dust into contact with a mixed gas containing a chlorine gas and an oxygen-containing gas, converting a zinc oxide component in the electric furnace dust or the secondary dust into zinc chloride, and vaporizing the zinc chloride. The zinc production method also includes a purification step of separating the zinc oxide component contained in the crude zinc chloride vapor from components other than zinc chloride contained in the crude zinc chloride vapor to obtain purified zinc chloride, and an electrolysis step of electrolyzing a molten salt electrolytic bath, in which the purified zinc chloride is melted, to obtain a zinc melt and a chlorine gas. As a specific example of the purification step, a method of condensing and liquefying the crude zinc chloride vaporized and separated from the electric furnace dust or the like at the chlorination step at a specific condensation temperature, for example, in a temperature range of about 380 ± 5°C near the melting point of zinc chloride is preferably used. Further, a method of purifying a part or all of the purified zinc chloride that has been once condensed and liquefied by repeating re-evaporation and condensation is also used preferably, in order to obtain high purity zinc chloride. At the purification step, one or a plurality of cooling units in order to perform condensation and liquefaction, or condensation and liquefaction and reflux inside a chlorination reaction device, and a receiver arranged so that the crude zinc chloride is not mixed in can be used.

When the cooling units and the receiver arranged corresponding to each of the cooling units are used, a temperature different from each other can be set, thereby enabling to perform separation and purification highly accurately. Further, the crude zinc chloride vaporized and discharged from the chlorination reaction device can be condensed and/or distilled in another device separate from the chlorination reaction device.

According to a second aspect of the present invention, in addition to the first aspect, the purification step includes a distillation purification step of obtaining the purified zinc chloride by distilling a melt containing the zinc chloride component contained in the crude zinc chloride vapor.

According to a third aspect of the present invention, in addition to the first aspect, the purification step includes a reduction purification step of obtaining the purified zinc chloride by adding a reducing agent to a melt containing the zinc chloride component contained in the crude zinc chloride vapor.

According to a fourth aspect of the present invention, in addition to the first aspect, the purification step includes a distillation purification step of obtaining primary purified zinc chloride by distilling a melt containing the zinc chloride component contained in the crude zinc chloride vapor and a reduction purification step of obtaining secondary purified zinc chloride by adding a reducing agent to a melt of the primary purified zinc chloride obtained at the distillation step.

According to a fifth aspect of the present invention, in addition to any of the first to fourth aspects, the chlorine gas is obtained by electrolysis at the electrolysis step.

According to a sixth aspect of the present invention, in addition to any of the first to fifth aspects, air is used as the oxygen-containing gas.

According to a seventh aspect of the present invention, in addition to any of the third to sixth aspects, the reducing agent is powdered metal zinc.

According to an eighth aspect of the present invention, in addition to any of the third to seventh aspects, at the reduction purification step, the reducing agent is added to molten salt in which the zinc chloride component contained in the crude zinc chloride vapor and alkali chloride or alkaline earth chloride are mixed and melted.

According to a ninth aspect of the present invention, in addition to any of the first to eighth aspects, at the electrolysis step, the molten salt electrolytic bath in which the purified zinc chloride and alkali chloride or alkaline earth chloride are mixed and melted is electrolyzed.

### EFFECT OF THE INVENTION

According to the zinc production method of the first aspect of the present invention, the zinc oxide component can be preferentially chlorinated at the chlorination step, without chlorinating most of the iron oxide component and free iron oxide present singly in zinc ferrite. At the distillation purification step, the zinc chloride component contained in the crude zinc chloride vapor obtained at the chlorination step is separated from components other than zinc chloride contained in the crude zinc chloride vapor, thereby enabling to obtain a purified zinc chloride melt. At the electrolysis step, the molten salt electrolysis method can be performed by using the purified zinc chloride melt obtained at the purification step.

Accordingly, it is possible to realize the zinc production method that is suitable for treatment of electric furnace dust or the like containing chlorine in a large amount without requiring any additional cost for dechlorination, can produce zinc bare metal having a high purity of 4N or more, and can be operated with a compact apparatus.

According to the zinc production method of the second aspect of the present invention, at the distillation purification step, zinc chloride and metal chloride other than the zinc chloride are separated from each other by using a vapor pressure difference therebetween, and the zinc chloride component contained in the crude zinc chloride vapor can be purified. Accordingly, purified zinc chloride can be obtained easily and efficiently.

According to the zinc production method of the third aspect of the present invention, at the reduction purification step, the metal impurity component more noble than zinc in the zinc chloride melt can be reduced and deposited as a solid, thereby enabling to purify the zinc chloride component contained in the crude zinc chloride vapor. Accordingly, purified zinc chloride can be obtained easily and efficiently.

According to the zinc production method of the fourth aspect of the present invention, the reduction purification step is provided at a subsequent stage of the distillation purification step and at a previous stage of the electrolysis step. At the reduction purification step, by adding the reducing agent to zinc chloride in a molten state, having been subjected to the distillation purification step, a heat quantity to be consumed and a consumed amount of the reducing agent at each step can be complemented mutually and optimized. Accordingly, purified zinc chloride having a higher purity can be obtained at a low cost.

According to the zinc production method of the fifth aspect of the present invention, the chlorine gas is obtained by electrolysis at the electrolysis step. Accordingly, a closed-cycle zinc production method can be used, thereby enabling to reduce generation of waste.

According to the zinc production method of the sixth aspect of the present invention, by using air as the oxygen-containing gas, there is no necessity of separately providing an oxygen-gas supply source. The ambient air can be introduced easily at the chlorination step via a supply pump.

According to the zinc production method of the seventh aspect of the present invention, the reducing agent is the powdered metal zinc. Therefore, the metal impurity component more noble than zinc in the zinc chloride melt can be reduced and deposited and separated reliably, thereby enabling to purify the zinc chloride component contained in the crude zinc chloride vapor.

According to the zinc production method of the eighth aspect of the present invention, at the reduction purification step, the reducing agent is added to the molten salt in which the zinc chloride component contained in the crude zinc chloride vapor and alkali chloride or alkaline earth chloride are mixed and melted. Accordingly, the alkali chloride or the alkaline earth chloride functions as supporting salt in the molten salt electrolytic bath at the electrolysis step at the subsequent stage. As a result, the viscosity, the electric resistance, and the vapor pressure of the molten salt electrolytic bath can be optimized, thereby enabling to improve the electrolysis efficiency.

According to the zinc production method of the ninth aspect of the present invention, at the electrolysis step, the molten salt electrolytic bath in which the purified zinc chloride and alkali chloride or alkaline earth chloride are mixed and melted is used. Accordingly, the alkali chloride or the alkaline earth chloride functions as supporting salt in the molten salt electrolytic bath. As a result, the viscosity, the electric resistance, and the vapor pressure of the molten salt electrolytic bath can be optimized, thereby enabling to improve the electrolysis efficiency.

### BRIEF DESCRIPTION OF THE DRAWINGS

[FIG. 1] FIG. 1 is a process chart of a zinc production method according to an embodiment of the present invention.
[FIG. 2] FIG. 2 is a process chart of a modification of the zinc production method according to the embodiment of the present invention.
[FIG. 3] FIG. 3 is a process chart of another modification of the zinc production method according to the embodiment of the present invention.

### EMBODIMENT FOR CARRYING OUT THE INVENTION

Embodiments of a zinc production method according to the present invention will be explained below in detail with reference to the accompanying drawings.

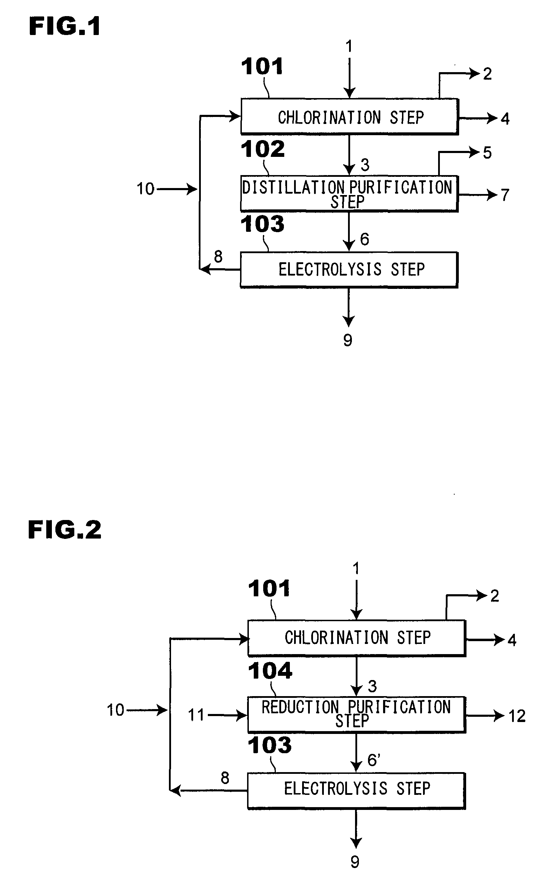

First, a zinc production method according to an embodiment of the present invention is described in detail with reference to FIG. 1.

FIG. 1 is a chart showing a process of the zinc production method according to the embodiment of the present invention.

As shown in FIG. 1, first, at a chlorination step 101, a mixed gas containing a chlorine gas 8 and an oxygen-containing gas 10 is brought into contact with electric furnace dust 1 or secondary dust 1 in a chlorination furnace (not shown), thereby obtaining a zinc oxide component in the electric furnace dust 1 or the secondary dust 1 as crude zinc chloride vapor 3. On the other hand, an iron component in the electric furnace dust 1 or in the secondary dust 1 is not chlorinated and remains as a solid. The chlorination step 101 is a reaction step to obtain the crude zinc chloride vapor 3 from the zinc oxide component in the electric furnace dust 1 or the secondary dust 1. The composition of the secondary dust 1 is shown in Table 1 below.

**[Table 1]**

| Zn (%) | Pb (%) | Fe (%) | Cu (%) | Cd (%) | Sn (%) | Si (%) | Unmelted |
|---|---|---|---|---|---|---|---|
| 62.90 | 3.63 | 0.67 | 0.089 | 0.13 | 0.082 | 0.062 | Trace |

Specifically, at the chlorination step 101, the powdered electric furnace dust 1 or the powdered secondary dust 1 is stored in the chlorination furnace, and the chlorine gas 8 or a mixed gas containing the chlorine gas 8 and the oxygen-containing gas 10 is caused to flow therein from a bottom side of the stored powdered electric furnace dust 1 or powdered secondary dust 1. At the chlorination step 101, a reaction to substitute an oxygen component constituting metal oxide in the electric furnace dust 1 or the secondary dust 1 with chlorine proceeds to obtain the crude zinc chloride vapor 3, and an oxygen gas 2 is produced as a by-product. Regarding a metal component such as iron contained in the electric furnace dust 1 or the secondary dust 1, a part thereof is extracted together with a zinc component and mixed in the crude zinc chloride vapor 3 as an iron chloride gas, and the remainder thereof is separated as a residue 4.

As an experimental example of the chlorination step 101, a chlorination experiment was carried out by using zinc ferrite (chemical composition formula: ZnFeaO₄) synthesized from zinc oxide and ferric oxide. Specifically, in the experimental example, synthesized zinc ferrite was pulverized to obtain a sample, which was stored in a reaction tube made of quartz with a filter. A chlorine gas was then fed thereto via the filter.

The temperature at that time was 800°C, and the chlorine gas had a composition containing chlorine and air with a volume ratio of 3:10. Salt was discharged as vapor due to the reaction at that time, which was then collected. At this time, the solid sample did not react completely and a part thereof remained.

The obtained salt and the remaining solid sample (residue) were analyzed by an ICP emission spectrometer, to determine a molar ratio Fe/Zn of iron and zinc. This analysis result is shown in Table 2 below.

**[Table 2]**

| Object | Synthesized ferrite | Residue | Collected salt |
|---|---|---|---|
| Fe/Zn | 1.99 | 15.4 | 0.0032 |

As shown in Table 2, in the synthesized ferrite, Fe/Zn is 1.99, which approximately matches the stoichiometric ratio of 2.0. Meanwhile, in the residue, iron oxide was condensed, and in the collected salt, iron was about 0.3% of zinc. Accordingly, it is obvious that zinc has been selectively chlorinated.

Furthermore, it became clear from calculation based on the composition of the residue and salt that about 84% of the zinc component in zinc ferrite was chlorinated. The chlorination efficiency in the experiment is not so high. However, if it is taken into consideration that the grain size of the pulverized sample was coarse, and the temperature was relatively low, it is assumed that the chlorination efficiency close to 100% can be obtained by optimizing the conditions.

Further, the residue containing iron in a large amount may be able to be used as a raw material at the time of producing pig iron. In this case, waste can be effectively recycled.

Subsequently, at a purification step (distillation purification step) 102, the crude zinc chloride vapor 3 obtained through the chlorination step 101 is distilled and purified, to obtain a purified zinc chloride melt 6.

Specifically, at the distillation purification step 102, the crude zinc chloride vapor 3 is stored in a distillation apparatus (not shown) lined with ceramics such as alumina and silicon carbide having corrosion resistance against high-temperature metal chloride. The purified zinc chloride melt 6 is separated by utilizing a vapor pressure difference due to the difference in the chloride. At this time, a metal chloride component 5 having a lower boiling point than zinc chloride and a metal chloride component 7 having a higher boiling point than zinc chloride are separated from the zinc chloride vapor 3.

Subsequently, at an electrolysis step 103, the purified zinc chloride melt 6 obtained through the distillation purification step 102 is stored and electrolyzed in an electrolytic cell(not shown), thereby obtaining a metal zinc melt 9, and also the chlorine gas 8 as a by-product. The result shown in Table 3 below was obtained by analyzing the composition of the metal zinc obtained in this manner. For the electrolytic cell used at the electrolysis step 103, as an example, an electrolytic cell housing a carbon electrode in a container lined with ceramics can be used.

**[Table 3]**

| Zn (%) | Pb (%) | Fe (%) | Cu (%) | Cd (%) | Sn (%) | Si (%) |
|---|---|---|---|---|---|---|
| 99.99 | 0.0002 | 0.0008 | 0.001 | 0.0001 | 0.0002 | - |

In the present embodiment, in terms of reducing generation of waste by realizing a closed-cycle zinc production method, a chlorine gas produced as a by-product in an anode at the electrolysis step 103 can be used, as the chlorine gas 8 to be used at the chlorination step 101.

Furthermore, as the oxygen-containing gas 10 to be used at the chlorination step 101, ambient air easily supplied by a pump or the like can be used instead of providing any particular oxygen gas source.

Further, a heating furnace (a reaction distillation still) having a configuration in which a reactor used at the chlorination step 101 and a distillation still used at the distillation purification step 102 are shared, which can change the gas temperature therein in a stepwise manner can be used.

In this case, the produced crude zinc chloride vapor 3 is introduced therein, and a low-boiling point component such as iron chloride (FeCl₃) is accumulated as a liquid or a solid in a low-temperature portion of the heating furnace. A high-boiling point component such as sodium chloride, potassium chloride, and lead chloride (PbCl₂) is accumulated in a high-temperature portion of the heating furnace. In an intermediate portion between the low-temperature portion and the high-temperature portion of the heating furnace, zinc chloride can be condensed and produced.

At the electrolysis step 103, a molten salt electrolytic bath in which the purified zinc chloride melt 6 and alkali chloride or alkaline earth chloride are mixed and melted can be used. Accordingly, in the molten salt electrolytic bath, the alkali chloride or the alkaline earth chloride functions as supporting salt, and the viscosity, the electric resistance, and the vapor pressure of the molten salt electrolytic bath can be optimized, thereby enabling to improve the electrolysis efficiency. Further, as the alkali chloride or the alkaline earth chloride, it is more preferable to use sodium chloride, in regards to cost and its property as supporting salt.

According to the zinc production method of the present embodiment, a zinc production method that is suitable for treatment of electric furnace dust or the like containing chlorine in a large amount without requiring any additional cost for dechlorination, can produce zinc bare metal having a high purity of 4N or more, and can be operated with a compact apparatus can be realized. Particularly, at the chlorination step 101, by bringing the electric furnace dust 1 into contact with a mixed gas containing the chlorine gas 8 and the oxygen-containing gas 10, zinc oxide in zinc ferrite contained in the electric furnace dust 1 can also be chlorinated. Therefore, most of an iron component 4 is not chlorinated and remains as a solid, thereby enabling to chlorinate and vaporize the zinc component selectively.

In the zinc production method according to the present embodiment, various modifications can be considered. Particularly, the distillation purification step 102 can be replaced by a reduction purification step 104. This modification is described in detail with reference to FIG. 2.

FIG. 2 is a process chart of the modification of the zinc production method according to the present embodiment.

As shown in FIG. 2, according to a zinc production method of the present modification, the main difference from the present embodiment is that the distillation purification step 102 of the present embodiment described above is replaced by the reduction purification step 104. Remaining steps are identical to those of the present embodiment.

That is, according to the zinc production method of the present modification, the crude zinc chloride vapor 3 obtained through the chlorination step 101 is reduced and purified, to obtain a purified zinc chloride melt 6'.

Specifically, at the reduction purification step 104, by adding a reducing agent 11 to the zinc chloride melt obtained from the crude zinc chloride vapor 3 obtained through the chlorination step 101, and reducing and depositing a metal impurity component 12 more noble than zinc to remove the precipitate, the purified zinc chloride melt 6' is obtained.

The reducing agent 11 is preferably powdered metal zinc, with the object of separating the metal impurity component 12 more noble than zinc in the zinc chloride melt by reduction and deposition efficiently and reliably.

At the electrolysis step 103, the purified zinc chloride melt 6' obtained through the reduction purification step 104 is electrolyzed to obtain the metal zinc melt 9, and also the chlorine gas 8 as a by-product. Further, by cooling and solidifying the zinc melt 9, metal zinc having a purity of 4N or more was obtained.

At the reduction purification step 104, it is preferable to add a reducing agent to the molten salt in which alkali chloride or alkaline earth chloride is added and melted in the zinc chloride melt. Accordingly, in the molten salt electrolytic bath at the electrolysis step 103 at the subsequent stage, the alkali chloride or the alkaline earth chloride functions as supporting salt, and the viscosity, the electric resistance, and the vapor pressure of the molten salt electrolytic bath can be optimized, thereby enabling to improve the electrolysis efficiency. Further, as the alkali chloride or the alkaline earth chloride, it is more preferable to use sodium chloride, in regards to cost and its property as supporting salt.

Furthermore, in terms of realizing a closed-cycle zinc production method and the like, at the reduction purification step 104, electrolytic tailing salt having been subjected to the electrolysis step 103 is mixed with the zinc chloride melt can be used.

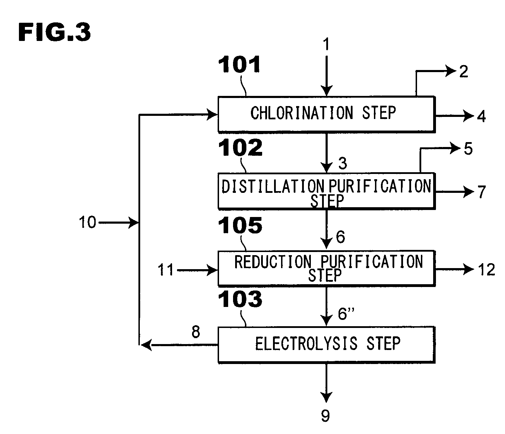

As another modification of the zinc production method according to the present embodiment, a reduction purification step 105 can be added subsequent to the distillation purification step 102. This modification is described in detail with reference to FIG. 3.

FIG. 3 is a process chart of another modification of the zinc production method according to the present embodiment.

As shown in FIG. 3, according to a zinc production method of the present modification, the main difference from the present embodiment is that the reduction purification step 105 is provided between the distillation purification step 102 and the electrolysis step 103 in the present embodiment described above. Remaining steps are identical to those of the present embodiment.

That is, in the zinc production method of the present modification, the purified zinc chloride melt 6 (primary purified zinc chloride melt) obtained through the distillation purification step 102 is reduced and purified, to obtain a purified zinc chloride melt 6'' (secondary purified zinc chloride melt).

Specifically, at the reduction purification step 105, the reducing agent 11 is added to the primary purified zinc chloride melt 6 obtained through the distillation purification step 102 to precipitate and remove the metal impurity component 12 more noble than zinc, thereby obtaining the secondary purified zinc chloride melt 6''. The reduction purification step 105 is identical to the reduction purification step 104 in the modification described above.

At the electrolysis step 103, the secondary purified zinc chloride melt 6'' obtained through the reduction purification step 105 is electrolyzed, to obtain the metal zinc melt 9, and also the chlorine gas 8 as a by-product. Further, by cooling and solidifying the zinc melt 9, metal zinc having a purity of 4N or more was obtained. In the present modification, the consumed amount of heat and the reducing agent at each of the distillation purification step 102 and the reduction purification step 105 can be complemented mutually and optimized.

Accordingly, purified zinc chloride having a higher purity can be obtained at a low cost.

An experimental example of the present modification is described here.

At the chlorination step 101 in the present experimental example, electric furnace dust having a composition shown in Table 4 below was brought into contact with a mixed gas containing the chlorine gas 8 and the oxygen-containing gas 10, in a vertical tubular furnace, being a reaction tube, in which the reaction temperature was maintained at 900°C. At the chlorination step 101, a zinc component was mainly extracted as zinc chloride from the electric furnace dust in the tubular furnace, and vaporized and separated. A non-volatile residue containing iron oxide as the main component remained at a bottom portion of the tubular furnace.

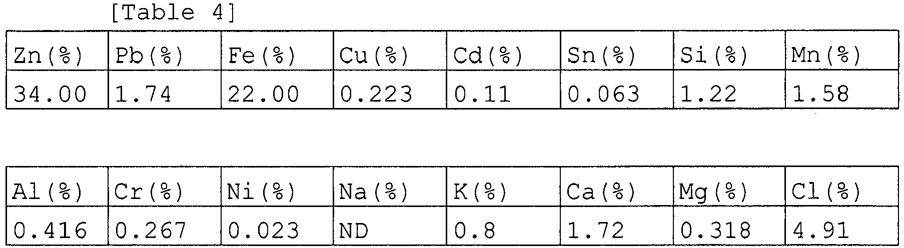

Subsequently, at the distillation purification step 102, vapor containing zinc chloride obtained at the chlorination step 101 as the main component was caused to pass through a porous body made of ceramics at a top portion of the tubular furnace, in which the temperature thereof was controlled to be maintained at 380°C ± 5°C, to be condensed and liquefied. Accordingly, the primary purified zinc chloride melt 6 was obtained. The composition of the primary purified zinc chloride melt 6 obtained at the distillation purification step 102 is shown in Table 5 below, and the composition of the residue containing the non-volatile iron oxide as the main component, which remained at the bottom portion of the tubular furnace at the chlorination step 101 is shown in Table 6 below.

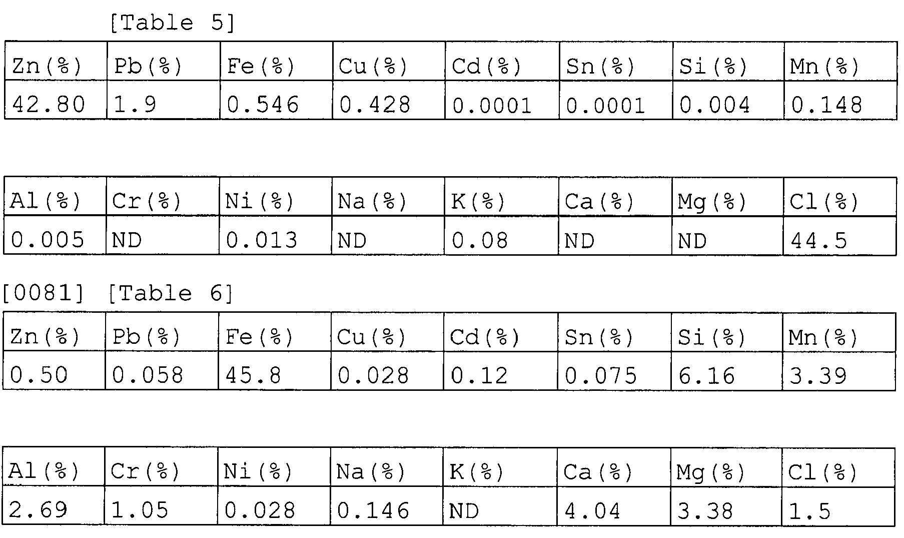

Subsequently, at the reduction purification step 105, the primary purified zinc chloride melt 6 obtained at the distillation purification step 102 was held in a heated molten state by maintaining the temperature at 500°C, in a crucible housed in a muffle furnace in which the pressure of a gas phase was set to a range from (atmospheric pressure - 10) Pa to (atmospheric pressure - 200) Pa. With respect to the primary purified zinc chloride melt 6 in the heated molten state, zinc powder corresponding to about 1% by weight was added and stirred while causing a nitrogen gas to flow therein. The top clear layer of the melt obtained at this time was collected as the secondary purified zinc chloride melt 6''. The composition of the secondary purified zinc chloride melt 6'' is shown in Table 7 below.

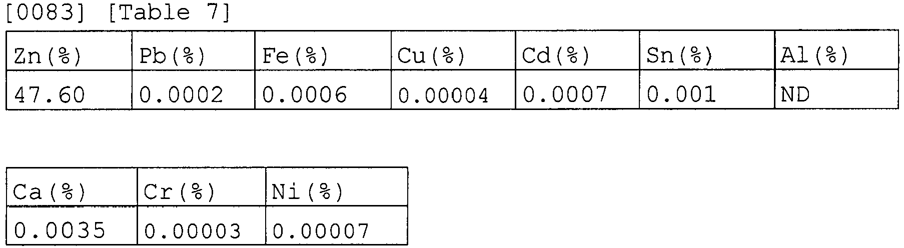

Finally, at the electrolysis step 103, the secondary purified zinc chloride melt 6'' obtained through the reduction purification step 105 was electrolyzed in an electrolytic cell, in which the bath temperature was set to 500°C and a carbon electrode was stored therein, to obtain the metal zinc melt 9, of which composition is shown in Table 8 below.

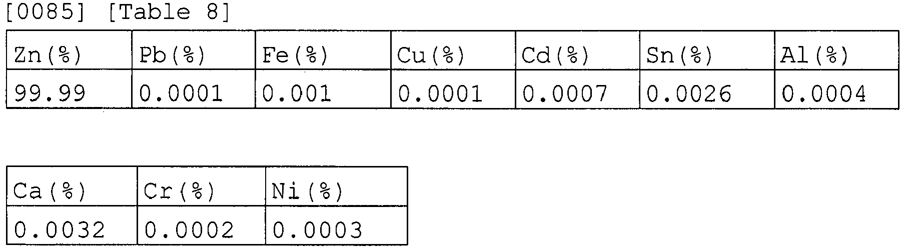

The electrolytic bath of the electrolytic cell is a mixed salt bath in which sodium chloride is added to the secondary purified zinc chloride melt 6'', and the composition thereof is shown in Table 9 below.

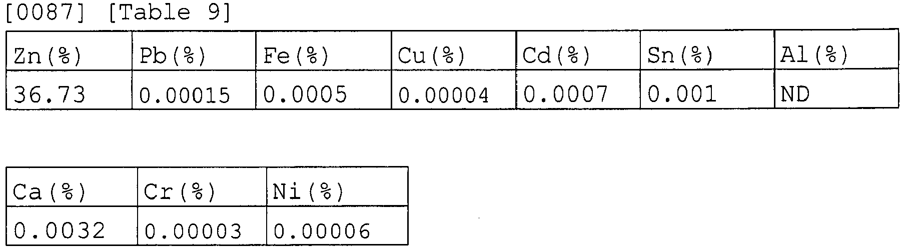

In the present invention, the shapes, the arrangements, the numbers, and the like of constituent elements are not limited to those described in the above embodiments, and it is needless to mention that changes can be appropriately made without departing from the scope of the invention, such as replacing these constituent elements with other elements having equivalent operational effects.

### INDUSTRIAL APPLICABILITY

As described above, according to the present invention, it is possible to provide a zinc production method that is suitable for treatment of electric furnace dust or the like containing chlorine in a large amount, without requiring any additional cost for dechlorination and also containing zinc components in ferrite, which is difficult to be treated in wet refining, can produce zinc bare metal having a high purity of 4N or more, and can be operated with a compact apparatus. Therefore, because of its general purposes and universal characteristics, applications of the present invention can be expected in a wide range in a zinc production method using, as a raw material, electric furnace dust generated at the time of melting and refining of scraps in an electric furnace method, being one of iron-making processes or secondary dust.

## Claims

1. A zinc production method comprising:
a chlorination step of obtaining crude zinc chloride vapor by bringing electric furnace dust containing zinc oxide or secondary dust generated at a time of reducing the electric furnace dust in a reduction furnace into contact with a mixed gas containing a chlorine gas and an oxygen-containing gas, converting a zinc oxide component in the electric furnace dust or the secondary dust into zinc chloride, and vaporizing the zinc chloride;
a purification step of obtaining purified zinc chloride by separating a zinc chloride component contained in the crude zinc chloride vapor from components other than zinc chloride contained in the crude zinc chloride vapor; and
an electrolysis step of obtaining a zinc melt and a chlorine gas by electrolyzing a molten salt electrolytic bath in which the purified zinc chloride is melted.

2. The zinc production method according to claim 1, wherein the purification step includes a distillation purification step of obtaining the purified zinc chloride by distilling a melt containing the zinc chloride component contained in the crude zinc chloride vapor.

3. The zinc production method according to claim 1, wherein the purification step includes a reduction purification step of obtaining the purified zinc chloride by adding a reducing agent to a melt containing the zinc chloride component contained in the crude zinc chloride vapor.

4. The zinc production method according to claim 1, wherein the purification step includes a distillation purification step of obtaining primary purified zinc chloride by distilling a melt containing the zinc chloride component contained in the crude zinc chloride vapor and a reduction purification step of obtaining secondary purified zinc chloride by adding a reducing agent to a melt of the primary purified zinc chloride obtained at the distillation step.

5. The zinc production method according to any one of claims 1 to 4, wherein the chlorine gas is obtained by electrolysis at the electrolysis step.

6. The zinc production method according to any one of claims 1 to 5, wherein air is used as the oxygen-containing gas.

7. The zinc production method according to any one of claims 3 to 6, wherein the reducing agent is powdered metal zinc.

8. The zinc production method according to any one of claims 3 to 7, wherein at the reduction purification step, the reducing agent is added to molten salt in which the zinc chloride component contained in the crude zinc chloride vapor and alkali chloride or alkaline earth chloride are mixed and melted.

9. The zinc production method according to any one of claims 1 to 8, wherein at the electrolysis step, the molten salt electrolytic bath in which the purified zinc chloride and alkali chloride or alkaline earth chloride are mixed and melted is electrolyzed.
